# EUROPÄISCHE PATENTSCHRIFT

(11) **EP 3 475 936 B1**
(45) Veröffentlichungstag und Bekanntmachung des Hinweises auf die Patenterteilung: **13.05.2020**
(21) Anmeldenummer: 17734266.4
(22) Anmeldetag: 20.06.2017
(51) Int. Cl.: G08G 1/16, G08G 1/13, G05D 1/00, G05D 1/02, B60W 30/095

(54) **VERFAHREN ZUM ÜBERPRÜFEN EINER KOLLISION ZWISCHEN ZWEI FAHRERLOSEN TRANSPORTFAHRZEUGEN, FAHRERLOSES TRANSPORTFAHRZEUG UND SYSTEM MIT MEHREREN FAHRERLOSEN TRANSPORTFAHRZEUGEN**
METHOD FOR VERIFYING A COLLISION BETWEEN TWO DRIVERLESS TRANSPORTING VEHICLES, A DRIVERLESS TRANSPORT VEHICLE AND A SYSTEM WITH SEVERAL DRIVERLESS TRANSPORT VEHICLES
PROCÉDÉ DE VERIFICATION D'UNE COLLISION ENTRE DEUX VÉHICULES DE TRANSPORT SANS CONDUCTEUR, UN VEHICULE DE TRANSPORT SANS CONDUCTEUR ET UN SYSTÈME À PLUSIEURS VÉHICULES DE TRANSPORT SANS CONDUCTEUR

(30) Priorität: 22.06.2016 DE 102016211129
(43) Veröffentlichungstag der Anmeldung: 01.05.2019
(73) Patentinhaber: KUKA Deutschland GmbH, 86165 Augsburg (DE)
(72) Erfinder: MARTENS, Moritz, 86179 Augsburg (DE); GRAMS, Tabea, 86156 Augsburg (DE)
(74) Vertreter: Tillmann, Axel
(86) Internationale Anmeldenummer: PCT/EP2017/065083
(87) Internationale Veröffentlichungsnummer: WO 2017/220574

(56) Entgegenhaltungen:
- DE-A1-102012 008 846
- DE-A1-102013 201 935
- US-A1- 2009 043 440
- US-A1- 2015 039 218

## Beschreibung

Die Erfindung betrifft ein Verfahren zum Überprüfen einer Kollision zwischen zwei fahrerlosen Transportfahrzeugen, ein fahrerloses Transportfahrzeug und ein System mit mehreren fahrerlosen Transportfahrzeugen.

Für ein automatisches Bewegen von fahrerlosen Transportfahrzeugen (Englisch: automated guided vehicle) kann eine Planung eines Pfades innerhalb eines Graphen durchgeführt werden. Der Graph ist der Umgebung, innerhalb der sich das fahrerlose Transportfahrzeug automatisch bewegen soll, zugeordnet. Der ermittelte bzw. geplante Pfad ist der Strecke, die das fahrerlose Transportfahrzeug abfahren soll, zugeordnet.

Die EP 2 818 954 A2 offenbart ein Verfahren zum Planen einer virtuellen Spur bzw. virtuellen Leitlinie, entlang der sich ein fahrerloses Transportfahrzeug innerhalb einer Umgebung automatisch von einem Startpunkt zu einem Zielpunkt bewegen soll. Die Umgebung umfasst Zwischenpunkte und die Zwischenpunkte, den Startpunkt und den Zielpunkt verbindende Streckenabschnitte. Der Umgebung ist ein Graph zugeordnet, dessen Knoten den Punkten und dessen Kanten den Streckenabschnitten der Umgebung zugeordnet sind.

Die DE 10 2012 008846 A1 offenbart ein fahrerloses Transportsystem mit mehreren fahrerlosen Transportfahrzeugen, welche jeweils eine Umfelderkennungseinrichtung aufweisen, mittels welcher ein Detektionsfeld vorgebbarer Größe zur Kollisionsvermeidung einstellbar ist.

Die US 2009/043440 A1 offenbart eine autonome mobile Vorrichtung, deren Bewegung durch eine Steuereinrichtung gesteuert wird, wobei die mobile Vorrichtung eine erste Detektionseinheit zum Detektieren eines Hindernisses aufweist.

Die US 2015/039218 A1 offenbart ein adaptives Detektionssystem, welches eingerichtet ist, Sensordaten zu erfassen, die Hindernisse in der Nähe eines Fahrzeugs betreffen.

Die 10 2013 201935 A1 offenbart die Verwendung einer Belegungskarte zum Ermitteln von kollisionsfreien Pfaden für ein bewegliches Objekt.

Befinden sich mehrere fahrerlose Transportfahrzeuge innerhalb der Umgebung, dann sollte die Planung des Pfades auch eine Vermeidung einer Kollision zweier fahrerloser Transportfahrzeuge umfassen.

Aufgabe der Erfindung ist es, im Rahmen eines Planens einer Bewegung eines fahrerlosen Transportfahrzeugs eine verbesserte Überprüfung einer Kollision des fahrerlosen Transportfahrzeugen mit einem weiteren fahrerlosen Transportfahrzeug anzugeben.

Die Aufgabe der Erfindung wird gelöst durch ein Verfahren zum Überprüfen einer Kollision zwischen einem fahrerlosen Transportfahrzeug und einem weiteren fahrerlosen Transportfahrzeug während einer Planung einer Bewegung wenigstens des fahrerlosen Transportfahrzeugs, aufweisend folgende Verfahrensschritte:
- Bereitstellen von zweidimensionalen Modellen der fahrerlosen Transportfahrzuge,
- Bestimmen einer von dem fahrerlosen Transportfahrzeug überstrichenen Fläche, die das fahrerlose Transportfahrzeug während der geplanten Bewegung überstreicht, und
- Bestimmen einer von dem weiteren fahrerlosen Transportfahrzeug weiteren überstrichenen Fläche, die das weitere fahrerlose Transportfahrzeug während der geplanten Bewegung überstreicht, und Überprüfen einer Kollision zwischen dem fahrerlosen Transportfahrzeug und dem weiteren fahrerlosen Transportfahrzeug, indem die beiden überstrichenen Flächen auf ein Überschneiden überprüft werden, oder Überprüfen einer Kollision zwischen dem fahrerlosen Transportfahrzeug und dem weiteren fahrerlosen Transportfahrzeug, indem die dem fahrerlosen Transportfahrzeug zugeordnete überstrichene Fläche auf ein Überschneiden mit dem zweidimensionalen Modell des weiteren Transportfahrzeugs überprüft wird.

Das erfindungsgemäße Verfahren wird vorzugsweise von einem externen Rechner, insbesondere einem sogenannten Flottenmanager, durchgeführt. Ein weiterer Aspekt der Erfindung betrifft daher ein System, aufweisend das fahrerlose Transportfahrzeug, das weitere fahrerlose Transportfahrzeug und einen Rechner, der mit den fahrerlosen Transportfahrzeugen zu kommunizieren vermag, wobei der Rechner eingerichtet ist, das erfindungsgemäße Verfahren durchzuführen.

Das fahrerlose Transportfahrzeug ist z.B. ein mobiler Roboter. Das als mobiler Roboter ausgeführte fahrerlose Transportfahrzeug kann einen Roboterarm mit mehreren hintereinander angeordneten Gliedern umfassen, die mittels Gelenke verbunden sind. Der Roboterarm kann z.B. am Fahrzeuggrundkörper befestigt sein. Die elektronische Steuervorrichtung zum Bewegen der Räder kann auch eingerichtet sein, den Roboterarm zu bewegen.

Das fahrerlose Transportfahrzeug kann vorzugsweise als ein holonomes bzw. omnidirektionales fahrerloses Transportfahrzeug ausgebildet sein. In diesem Fall umfasst das fahrerlose Transportfahrzeug omnidirektionale Räder, vorzugsweise sogenannte Mecanum-Räder, welche von der elektronischen Steuervorrichtung angesteuert werden.

Gemäß dem erfindungsgemäßen Verfahren wird demnach für die Überprüfung der Kollision (Kollisionsüberprüfung) bei der Planung die Bewegung zumindest eines fahrerlosen Transportfahrzeugs berücksichtigt. Diese Bewegung wird erfindungsgemäß als die überstrichene Fläche, die das fahrerlose Transportfahrzeug gemäß der Planung seiner Bewegung überstreichen soll, modelliert. Soll das weitere fahrerlose Transportfahrzeug gemäß der Planung stehen, so wird überprüft, ob diese überstrichene Fläche das zweidimensionale Modell des weiteren fahrerlosen Transportfahrzeugs überschneidet. Ist dies nicht der Fall, dann ergibt sich eine kollisionsfreie Bewegung des fahrerlosen Transportfahrzeugs. Überschneidet sich dagegen das zweidimensionale Modell des weiteren fahrerlosen Transportfahrzeug mit der überstrichenen Fläche, dann wird insbesondere die Planung bzw. der fragliche Teil der Planung verworfen.

Bewegt sich ebenfalls das weitere fahrerlose Transportfahrzeug gemäß der Planung, so werden die Bewegungen beider fahrerlosen Transportfahrzeuge bei der Kollisionsüberprüfung berücksichtigt, indem überprüft wird, ob sich die beiden überstrichenen Flächen überschneiden. Ist dies nicht der Fall, dann ergeben sich kollisionsfreie Bewegungen beider fahrerloser Transportfahrzeuge. Überschneiden sich dagegen die beiden überstrichenen Flächen, dann wird insbesondere die Planung bzw. der fragliche Teil der Planung verworfen.

Das fahrerlose Transportfahrzeug soll sich insbesondere innerhalb einer Umgebung bewegen. Der Umgebung ist insbesondere ein Graph zugeordnet, der mehrere Knoten und die Knoten verbindende Kanten aufweist. Den Kanten sind Streckenabschnitte der Umgebung und den Knoten sind die beiden Enden der Streckenabschnitte zugeordnete Punkte der Umgebung zugeordnet. Für die Planung der Bewegung des fahrerlosen Transportfahrzeugs wird insbesondere ein Pfad innerhalb des Graphen ermittelt, der mehrere Kanten des Graphen umfasst. Daraus ergibt sich eine Strecke, die den Kanten des Graphen zugeordnete Streckenabschnitte umfasst. Das fahrerlose Transportfahrzeug kann dann automatisch der Strecke folgen.

Die erfindungsgemäße Kollisionsüberprüfung ist dann vorzugsweise Teil der Planung des Pfades, wobei solche Kanten verworfen werden, für die eine Kollision erkannt wird.

Es kann vorgesehen sein, dass die fahrerlosen Transportfahrzeuge jeweils mit wenigstens einer Nutzlast beladen sind. Vorzugsweise sind deshalb die zweidimensionalen Modelle zweidimensionale Modelle der mit den Nutzlasten beladenen fahrerlosen Transportfahrzeuge, vorzugsweise zweidimensionale konvexe Modelle der mit den Nutzlasten beladenen fahrerlosen Transportfahrzeuge. Eine Teilmenge eines euklidischen Raums ist dann konvex, wenn für je zwei beliebige Punkte, die zur Menge gehören, auch stets deren Verbindungsstrecke ganz in der Menge liegt. Die zweidimensionalen konvexen Modelle umfassen also keine Einbuchtungen. Die Verwendung von zweidimensionalen konvexen Modellen hat den Vorteil, dass relativ effizient automatisch überprüft werden kann, ob sie sich überschneiden. Insbesondere kann hierbei der sogenannte Trennungssatz verwendet werden. Es kann somit verhindert werden, dass sich überstehende Teile von fahrerlosen Transportfahrzeugen oder deren Nutzlast in die Einbuchtungen von anderen fahrerlosen Transportfahrzeugen Fahrzeugen bewegen, wenn die gefundenen Pläne ausgeführt werden. Derartige Manöver sind insbesondere bei sperrigen und schweren Nutzlasten unerwünscht.

Ein Aspekt der vorliegenden Erfindung betrifft demnach die Verwendung eines zweidimensionalen konvexen Modells eines mit einer Nutzlast beladenen fahrerlosen Transportfahrzeugs für eine Überprüfung einer Kollision mit einem weiteren fahrerlosen Transportfahrzeug, bzw. ein Verfahren zum Überprüfen einer Kollision zwischen einem fahrerlosen Transportfahrzeug und einem weiteren fahrerlosen Transportfahrzeug für eine Planung einer Bewegung wenigstens des fahrerlosen Transportfahrzeugs, aufweisend: Bereitstellen eines zweidimensionalen konvexen Modells des mit einer Nutzlast beladenen fahrerlosen Transportfahrzeugs.

Das zweidimensionale konvexe Modell des mit der Nutzlast beladenen fahrerlosen Transportfahrzeugs kann gemäß folgender Verfahrensschritte erstellt werden:
- Ermitteln des Umrisses der Draufsicht des mit der wenigstens einen Nutzlast beladenen fahrerlosen Transportfahrzeugs, und
- Bilden einer konvexen Hülle des Umrisses, um das zweidimensionale konvexe Modell des mit der Nutzlast beladenen fahrerlosen Transportfahrzeugs zu erhalten.

Zumindest ein Teil der Nutzlast und/oder des fahrerlosen Transportfahrzeugs kann als Draufsicht wenigstens einen kreisförmigen Umriss aufweisen. Dieser kreisförmige Umriss wird vorzugsweise vor dem Bilden der konvexen Hülle durch sein kleinstes umschließende Quadrat angenähert. Dies hat Vorteile für eine relativ effiziente automatisierte Kollisionsüberprüfung.

Für eine erhöhte Sicherheit bei der Kollisionsüberprüfung kann vorzugsweise die konvexe Hülle um einen vorgegebenen Sicherheitsabstand aufgebläht werden, um das zweidimensionale konvexe Modell des mit der Nutzlast beladenen fahrerlosen Transportfahrzeugs zu erhalten.

Vorzugsweise ist die überstrichene Fläche konvex, d.h. umfasst keine Einbuchtungen. Auch die weitere überstrichene Fläche ist vorzugsweise konvex. Dadurch kann relativ effizient insbesondere unter Verwendung des Trennungssatzes überprüft werden, ob sich die beiden konvexen überstrichenen Flächen überschneiden.

Die geplante Bewegung des fahrerlosen Transportfahrzeugs ist z.B. ein Drehen des fahrerlosen Transportfahrzeugs auf der Stelle. In diesem Fall ist vorzugsweise die überstrichene Fläche als der kleinste Umkreis des zweidimensionalen Modells ausgeführt. Ein Kreis ist ebenfalls konvex, sodass die als Umkreis ausgeführte überstrichene Fläche ebenfalls konvex ist.

Die geplante Bewegung des fahrerlosen Transportfahrzeugs kann entlang eines Streckenabschnitts verlaufen. In diesem Fall werden vorzugsweise für die überstrichene Fläche die geplanten Orientierungen des fahrerlosen Transportfahrzeugs an den beiden Enden des Streckenabschnitts berücksichtigt.

Die überstrichene Fläche kann auch abhängig von der Art der geplanten Bewegung entlang des Streckenabschnitts sein. Beispiele der Art der Bewegung entlang des Streckenabschnitts sind Folgende: Das fahrerlose Transportfahrzeug soll sich entlang einer virtuellen Leitlinie bewegen. Das fahrerlose Transportfahrzeug soll sich autonom entlang des Streckenabschnitts bewegen.

Die überstrichene Fläche des fahrerlosen Transportfahrzeugs kann z.B. der Umkreis der zweidimensionalen Modelle an den beiden Enden des Streckenabschnitts sein. Diese überstrichene Fläche ist konvex und erlaubt eine relativ schnelle und effiziente Kollisionsüberprüfung.

Die überstrichene Fläche des fahrerlosen Transportfahrzeugs kann z.B. das achsenparallele umschließende Rechteck der zweidimensionalen Modelle an den beiden Enden des Streckenabschnitts sein. Diese überstrichene Fläche ist ebenfalls konvex. Diese überstrichene Fläche modelliert zwar die Bewegung des fahrerlosen Transportfahrzeugs genauer als der Umkreis, ergibt aber einen etwas höheren Rechenaufwand bei der Kollisionsüberprüfung.

Soll z.B. das fahrerlose Transportfahrzeug autonom entlang des Streckenabschnitts fahren, dann kann die überstrichene Fläche die Vereinigung der besetzten Fläche der zweidimensionalen Modelle an den beiden Enden des Streckenabschnitts sein. Diese überstrichene Fläche ist zwar nicht konvex, seine beiden Bestandteile können aber vorzugsweise konvex ausgeführt sein.

Die überstrichene Fläche des fahrerlosen Transportfahrzeugs kann z.B. eine konvexe Hülle sein, welche die zweidimensionalen Modelle an den beiden Enden des Streckenabschnitts umschließt. Diese Modellierung der überstrichenen Fläche bietet sich vor allem dann an, wenn die Orientierungen des fahrerlosen Transportfahrzeugs an beiden Enden des Streckenabschnitts gleich bleiben sollen und insbesondere das fahrerlose Transportfahrzeug entlang der virtuellen Leitlinie fahren soll.

Die überstrichene Fläche des fahrerlosen Transportfahrzeugs kann z.B. die Umkreise der zweidimensionalen Modelle des fahrerlosen Transportfahrzeugs an den beiden Enden des Streckenabschnitts umfassen, wobei die überstrichene Fläche die konvexe Hülle dieser beiden Umkreise ist. Dieses Modell bietet sich vor allem dann an, wenn sich die Orientierungen des fahrerlosen Transportfahrzeugs an beiden Enden des Streckenabschnitts unterscheiden sollen und insbesondere das fahrerlose Transportfahrzeug entlang der virtuellen Leitlinie fahren soll.

Gemäß einer Ausführungsform des erfindungsgemäßen Verfahrens ist es vorgesehen, dass die Überprüfung der Kollision über mehrere hierarchische Stufen erfolgt. Dabei ist insbesondere die überstrichene Fläche in einer nachfolgenden Stufe im Vergleich zu seiner vorhergehenden Stufe genauer, jedoch rechenaufwändiger für das Überprüfen des Überschneidens ausgeführt. Vorzugsweise wird nur dann die nachfolgende Stufe ausgeführt, wenn aufgrund seiner vorhergehenden Stufe die der vorhergehenden Stufe zugeordnete überstrichene Fläche des fahrerlosen Transportfahrzeugs die der vorhergehenden Stufe zugeordnete weitere überstrichene Fläche, sollte sich das weitere fahrerlose Transportfahrzug ebenfalls bewegen, bzw. das zweidimensionale Modell des weiteren Transportfahrzeugs, im Falle des still stehenden weiteren fahrerlosen Transportfahrzeugs, überschneidet.

Da die vorhergehende Stufe recheneffizienter ausgeführt ist, kann gegebenenfalls relativ schnell erkannt werden, dass die fragliche geplante Bewegung kollisionsfrei ausgeführt werden kann.

Es kann z.B. eine erste, eine zweite und eine dritte hierarchische Stufe vorgesehen sein. In diesem Fall kann es vorzugsweise vorgesehen sein, dass die überstrichene Fläche der ersten Stufe der Umkreis der zweidimensionalen Modelle an den beiden Enden des Streckenabschnitts ist, und die überstrichen Fläche der zweiten Stufe das achsenparallele umschließende Rechteck der zweidimensionalen Modelle an den beiden Enden des Streckenabschnitts. Insbesondere der Umkreis als überstriche Fläche erlaubt eine relativ recheneffiziente Überprüfung des Überschneidens.

Die dritte Stufe bildet vorzugsweise die letzte Stufe. Für diese Stufe ist insbesondere die überstrichene Fläche abhängig von der Art der geplanten Bewegung. Die überstrichene Fläche der dritten Stufe ist z.B. die Vereinigung der besetzten Fläche der zweidimensionalen Modelle an den beiden Enden des Streckenabschnitts, oder die konvexe Hülle, welche die zweidimensionalen Modelle an den beiden Enden des Streckenabschnitts umschließt, oder umfasst die Umkreise der zweidimensionalen Modelle des fahrerlosen Transportfahrzeugs an den beiden Enden des Streckenabschnitts, wobei die überstrichene Fläche die konvexe Hülle dieser beiden Umkreise ist.

Ausführungsbeispiele der Erfindung sind exemplarisch in den beigefügten schematischen Figuren dargestellt. Es zeigen:
- Figur 1: eine Umgebung und ein der Umgebung zugeordneter Graph,
- Figur 2: ein fahrerloses Transportfahrzeug,
- Figuren 3-7: das Modellieren eines zweidimensionalen Modells des fahrerlosen Transportfahrzeugs mit transportierter Nutzlast,
- Figur 8: einen Umkreis als überstrichene Fläche eines sich entlang eines Streckenabschnitts bewegenden fahrerlosen Transportfahrzeugs,
- Figur 9: ein umschließendes Rechteck als überstrichene Fläche eines sich entlang eines Streckenabschnitts bewegenden fahrerlosen Transportfahrzeugs,
- Figur 10: einen Umkreis als überstrichene Fläche eines sich drehenden fahrerlosen Transportfahrzeugs, und
- Figuren 11-13: Beispiele von überstrichenen Flächen des fahrerlosen Transportfahrzeugs.

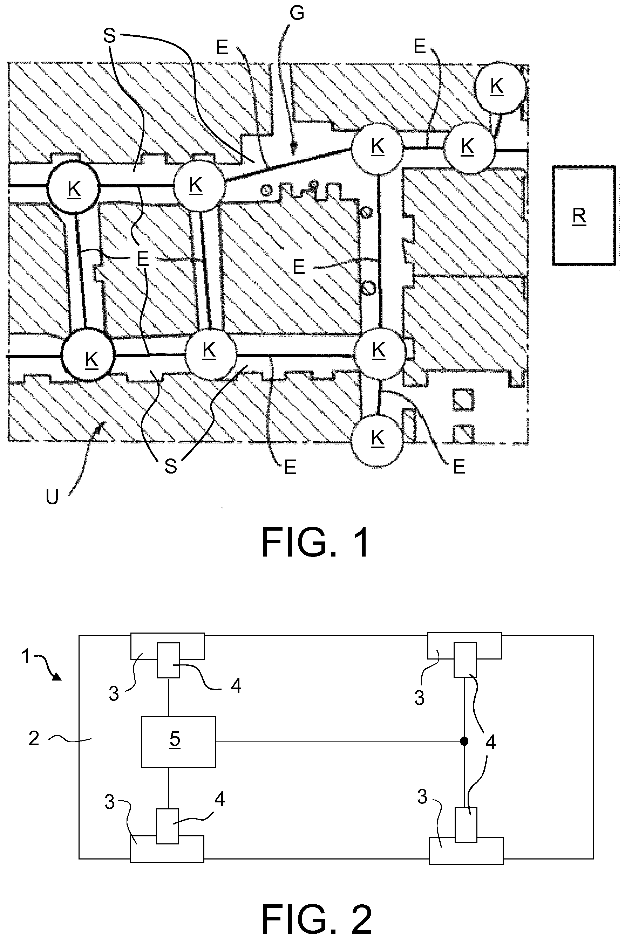

Die Figur 1 zeigt eine Umgebung U und einen der Umgebung U zugeordneten Graphen G. Der Graph G ist z.B. in einem zentralen Rechner R gespeichert und modelliert die Umgebung U. Der Rechner R ist insbesondere ein sogenannter Flottenmanager.

Der Graph G umfasst Knoten K und die Knoten K verbindende Kanten E. Die Umgebung U umfasst insbesondere Punkte und die Zwischenpunkte verbindende Streckenabschnitte S. Den Streckenabschnitten S sind die Kanten E und den Punkten sind die Knoten K zugeordnet.

Innerhalb der Umgebung U sollen sich mehrere fahrerlose Transportfahrzeuge bewegen. Eines der fahrerlosen Transportfahrzeuge 1 ist in der Fig. 2 gezeigt.

Das in der Fig. 2 schematisch gezeigte fahrerlose Transportfahrzeug 1 ist vorzugsweise derart ausgebildet, dass es sich in alle Richtungen frei bewegen lässt. Das fahrerlose Transportfahrzeug 1 ist insbesondere als ein omnidirektional bewegbares bzw. holonomes fahrerloses Transportfahrzeug 1 ausgebildet. Das fahrerlose Transportfahrzeug 1 kann ein mobiler Roboter sein, der einen Roboterarm mit mehreren, hintereinander angeordneten Gliedern umfasst, welche mittels Gelenke verbunden sind.

Im Falle des vorliegenden Ausführungsbeispiels weist das fahrerlose Transportfahrzeug 1 einen Fahrzeuggrundkörper 2 und mehrere omnidirektionale Räder 3 auf, die auch als Mecanum-Räder bezeichnet werden. Solche Räder umfassen beispielsweise eine drehbar gelagerte Felge, an der mehrere Rollkörper antriebslos gelagert sind. Die Felge kann mit einem Antrieb angetrieben werden. Im Falle des vorliegenden Ausführungsbeispiels werden die Räder 3 mit jeweils einem elektrischen Antrieb 4 angetrieben. Diese sind vorzugsweise geregelte elektrische Antriebe.

Das fahrerlose Transportfahrzeug 1 weist ferner eine am Fahrzeuggrundkörper 2 angeordnete elektronische Steuervorrichtung 5 auf, die mit den Antrieben 4 verbunden ist. Gegebenenfalls kann diese auch die Bewegung des Roboterarms, wenn vorhanden, ansteuern.

Das fahrerlose Transportfahrzeug 1 ist vorgesehen, sich automatisch innerhalb der Umgebung U insbesondere von einem der Punkte zu einem weiteren Punkt zu bewegen und somit wenigstens einen der Streckenabschnitte S zu passieren. Dazu läuft auf der elektronischen Steuervorrichtung 5 ein Rechenprogramm, das die Antriebe 4 derart ansteuert, dass diese automatisch das fahrerlose Transportfahrzeug 1 bewegt.

Im Falle des vorliegenden Ausführungsbeispiels wird diejenige Strecke, entlang derer die fahrerlosen Transportfahrzeuge fahren sollen, vom Rechner R geplant. Dazu läuft auf dem Rechner R ein Rechnerprogramm, welches zunächst Pfade innerhalb des Graphen G plant, die den entsprechenden Streckenabschnitten S, entlang derer die fahrerlosen Transportfahrzeuge fahren sollen, zugeordnet sind. Damit die einzelnen fahrerlosen Transportfahrzeuge die für sie relevanten Informationen vom Rechner R erhalten, sind der Rechner R und die fahrerlosen Transportfahrzeuge bzw. deren elektronische Steuervorrichtungen eingerichtet, dass sie miteinander zu kommunizieren vermögen.

Im Falle des vorliegenden Ausführungsbeispiels ist es vorgesehen, dass der Rechner R beim Planen der Pfade auch potenzielle Kollisionen zweier fahrerloser Transportfahrzeuge 1 berücksichtigt bzw. die Pfade derart plant, dass Kollisionen zweier fahrerloser Transportfahrzeuge 1 vermieden werden. Dazu werden die fahrerlosen Transportfahrzeuge 1 im Falle des vorliegenden Ausführungsbeispiels als Flächen modelliert, welche eine Draufsicht der Umrisse der einzelnen fahrerlosen Transportfahrzeuge 1 zumindest annähernd modellieren. Die entsprechenden zweidimensionalen Modelle bzw. Flächen der fahrerlosen Transportfahrzeuge 1 sind z.B. im Rechner R gespeichert oder werden aktuell berechnet.

Im Falle des vorliegenden Ausführungsbeispiels sind die fahrerlosen Transportfahrzeuge 1 vorgesehen, wenigstens eine Nutzlast zu transportieren. Die Nutzlast kann z.B. über dem entsprechenden fahrerlosen Transportfahrzeug 1 überstehen.

Im Falle des vorliegenden Ausführungsbeispiels ist bei dem Modellieren der fahrerlosen Transportfahrzeuge 1 auch deren transportierte Nutzlast mitberücksichtigt.

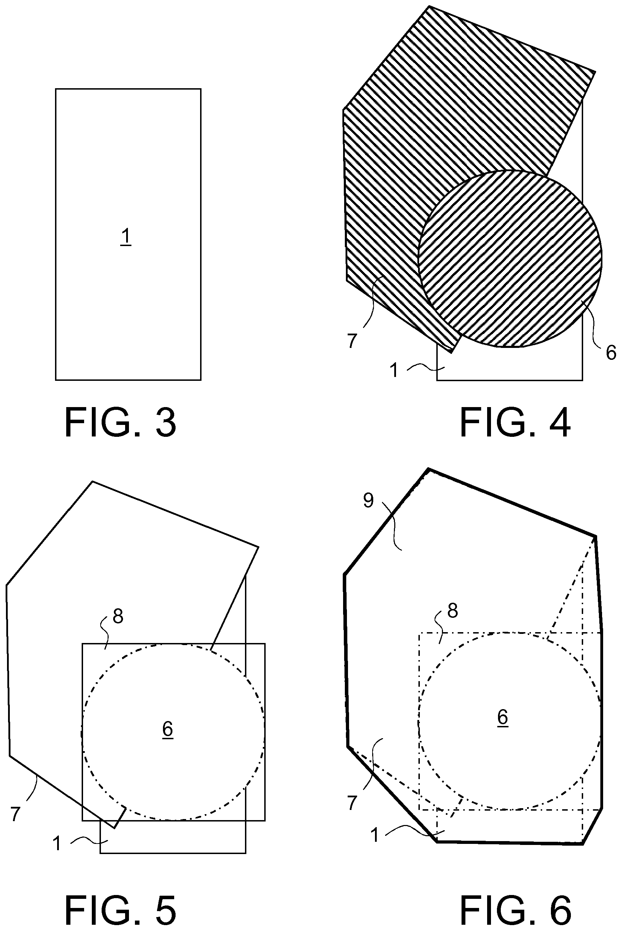

Die Figuren 3 bis 7 verdeutlichen ein Beispiel, wie das fahrerlose Transportfahrzeug 1 mit transportierter Nutzlast modelliert werden kann.

Die Fig. 3 zeigt eine Draufsicht des fahrerlosen Transportfahrzeugs 1 bzw. dessen Umriss. Der Umriss entspricht im Falle des vorliegenden Ausführungsbeispiels im Wesentlichen einem Rechteck. Eine Information über die Umrisse der fahrerlosen Transportfahrzeuge 1 sind z.B. in einer Datenbank, auf die der Rechner R zuzugreifen vermag, gespeichert.

Weiterhin sind im Falle des vorliegenden Ausführungsbeispiels die Umrisse bzw. eine Information über die Umrisse möglicherweise vorhandener Nutzlasten ebenfalls in der Datenbank gespeichert. So zeigt z.B. die Fig. 4 eine Draufsicht bzw. die Umrisse einer kreisförmigen Nutzlast 6 und einer eckigen Nutzlast 7, mit denen das fahrerlose Transportfahrzeug 1 beladen ist und die jeweils über dem fahrerlosen Transportfahrzeug 1 überstehen.

Im Falle des vorliegenden Ausführungsbeispiels wird nicht der genaue Umriss des mit den Nutzlasten 6, 7 beladenen fahrerlosen Transportfahrzeugs 1 für die Modellierung verwendet, sondern es werden z.B. aus Gründen der Effizienzsteigerung für eine Kollisionsüberprüfung alle kreisförmigen Umrisse durch das kleinste sie umschließende Quadrat 8 angenähert. Dies ist in der Fig. 5 gezeigt.

Aus den sich so ergebenden Umrissen wird im Falle des vorliegenden Ausführungsbeispiels eine sogenannte, in der Fig. 6 gezeigte (zweidimensionale) konvexe Hülle 9 gebildet. In der Mathematik bzw. der Informatik versteht man unter einer konvexen Hülle die kleinste konvexe Menge, die die Ausgangsmenge enthält. Eine Teilmenge eines euklidischen Raums ist dann konvex, wenn für je zwei beliebige Punkte, die zur Menge gehören, auch stets deren Verbindungsstrecke ganz in der Menge liegt. Die konvexe Hülle umfasst also keine Einbuchtungen.

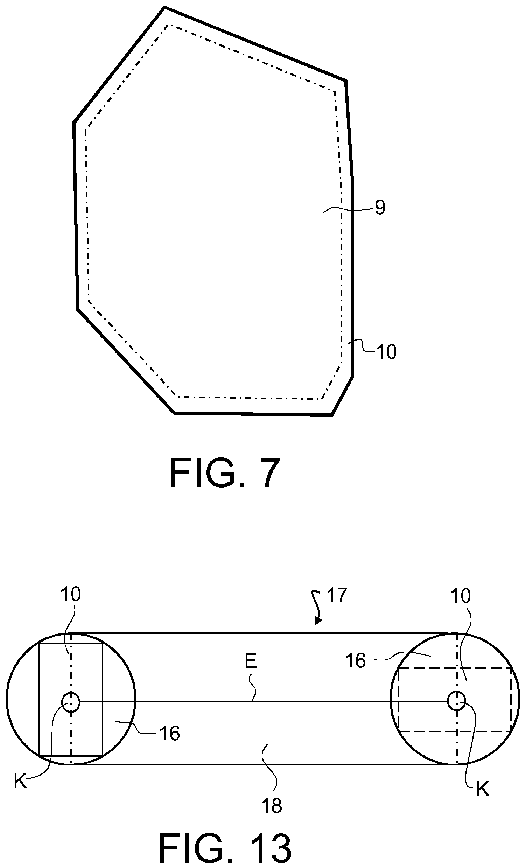

Für eine verbesserte Kollisionsvermeidung bzw. Kollisionsüberprüfung wird anschließend die das beladene fahrerlose Transportfahrzeug 1 modellierende konvexe Hülle 9, die in der Fig. 7 strichliert gezeigt ist, um einen Sicherheitsabstand bzw. parametrisierbaren Abstand erweitert bzw. aufgebläht, wodurch das in der Fig. 7 gezeigte zweidimensionale konvexe Modell 10 des beladenen fahrerlosen Transportfahrzeugs 1 entsteht. Das zweidimensionale konvexe Modell 10 ist ebenfalls konvex, d.h. das zweidimensionale konvexe Modell 10 ist ebenfalls eine konvexe Fläche bzw. ein konvexes Polygon bzw. eine konvexe Form. Das zweidimensionale konvexe Modell 10 weist also auch keine Einbuchtungen auf.

Die Gründe für die Nutzung der konvexen Hülle 9 bzw. des zweidimensionalen konvexen Modells 10 anstelle eine das beladene fahrerlose Transportfahrzeug 1 genauer modellierenden Form, die in der Regel nicht konvex ist, können u.a. Folgende sein: Es könnte nicht wünschenswert sein, dass ein sogenannter Flottenmanager, d.h. der Rechner R, Pfade plant, bei denen sich die beladenen fahrerlosen Transportfahrzeuge 1 so bewegen, dass überstehende Bestandteile des fahrerlosen Transportfahrzeugs oder der Nutzlasten 6, 7 sich in Freiräume bewegen, die sich möglicherweise zwischen anderen fahrerlosen Transportfahrzeugen 1 und deren Nutzlasten 6, 7 ergeben. Diese Gefahr ist durch Nutzung der konvexen Hülle 9 bzw. des zweidimensionalen konvexen Modelle 10 zumindest verringert, wenn nicht gar ausgeschlossen. Zweitens kann dadurch für eine Kollisionsüberprüfung der sogenannte Trennungssatz verwendet werden.

Im Falle des vorliegenden Ausführungsbeispiels wird eine mögliche Kollision zweier fahrerloser Transportfahrzeuge 1 während der Planung des Pfades überprüft. Dabei wird die Bewegung zumindest eines der beiden fahrerlosen Transportfahrzeugs 1 berücksichtig bzw. modelliert, indem die überstrichene Fläche, die das beladene fahrerlose Transportfahrzeug 1 bei einer Bewegung mindestens belegt, bestimmt wird. Die überstrichene Fläche ergibt sich z.B. wenn sich das fahrerlose Transportfahrzeug 1 auf der Stelle dreht. Die überstrichene Fläche ist vor allem diejenige Fläche, die das fahrerlose Transportfahrzeug 1 gemäß der Planung des entsprechenden Pfades entlang eines bestimmten Streckenabschnitts S, dem zwei benachbarte Knoten K und die dazugehörige Kante E des Graphen G zugeordnet sind, überstreichet.

Die überstrichene Fläche ist insbesondere ebenfalls konvex, umfasst also ebenfalls keine Einbuchtungen.

Anschließend wird überprüft, ob diese überstrichene Fläche eine weitere überstrichene Fläche, die einem weiteren fahrerlosen Transportfahrzeug 1 zugeordnet ist, überschneidet. Das weitere fahrerlose Transportfahrzeug 1 kann sich dabei ebenfalls bewegen oder auch still stehen. Überschneiden sich die beiden überstrichenen Flächen nicht, so kann das beladene fahrerlose Transportfahrzeug 1 diesen Streckenabschnitt S kollisionsfrei passieren oder sich auf der Stelle drehen und der entsprechende Streckenabschnitt S bzw. die entsprechende Drehung kann für die Planung des Pfades verwendet werden. Steht das weitere fahrerlose Transportfahrzeug still, dann entspricht dessen überstrichenen Fläche dessen zweidimensionalen konvexen Modell.

Für das Bestimmen der überstrichenen Fläche werden insbesondere die potenziell geplanten Orientierungen des fahrerlosen Transportfahrzeugs 1 an den beiden Enden des Streckenabschnitts S bzw. der Knoten K der entsprechenden Kante E berücksichtigt.

Für das Bestimmen der überstrichenen Fläche des fahrerlosen Transportfahrzeugs 1 werden im Falle des vorliegenden Ausführungsbeispiels die potenziellen Positionen und Orientierungen des fahrerlosen Transportfahrzeugs 1 unter Verwendung seines zweidimensionalen konvexen Modells 10 an den beiden Enden des fraglichen Streckenabschnitts S simuliert, indem die entsprechenden Orientierungen an den Knoten K des Graphen G, die den beiden Enden des fraglichen Streckenabschnitts S zugeordnet sind, simuliert werden. Die überstrichene Fläche ergibt sich dann z.B. durch ein Berechnen einer die beiden zweidimensionalen konvexen Modelle 10 umschließenden konvexen Hülle.

Im Falle des vorliegenden Ausführungsbeispiels erfolgt die Überprüfung einer potenziellen Kollision über mehrere Stufen, d.h. es gibt eine Hierarchie von Heuristiken für die Kollisionsüberprüfung.

Im Falle des vorliegenden Ausführungsbeispiels werden in einer ersten Stufe die überstrichenen Flächen mittels relativ einfacher geometrischer Formen angenähert. Für die Überprüfung einer potenziellen Kollision sind Überprüfungsroutinen zwischen konvexen Polygonen bzw. konvexen Formen sowie zwischen konvexen Polygonen bzw. Formen und Kreisen auf dem Rechner R implementiert. Hierbei wird insbesondere Wert auf eine möglichst effiziente Implementierung gelegt. Diese Implementierungen beruhen insbesondere auf dem Trennungssatz. Der Trennungssatz erlaubt es in vielen Fällen, das Nichtvorhandensein einer Intersektion, also eines Überschneidens von konvexen geometrischen Formen relativ frühzeitig zu erkennen.

Diese relativ einfache geometrische Form beinhaltet die gesamte überstrichene Fläche, die das fragliche fahrerlose Transportfahrzeug 1 beim Passieren des fraglichen Streckenabschnitts S bzw. bei einer Drehung auf der Stelle überstreichen würde. In der ersten Stufe ist die überstrichene Fläche jedoch relativ ungenau, jedoch relativ effizient für eine automatisierte Überprüfung gewählt.

Im Falle des vorliegenden Ausführungsbeispiels sind der Kollisionsüberprüfung unter Verwendung einer relativ genauen modellierten überstrichenen Fläche zwei Stufen bzw. Heuristiken vorgeschaltet, die unter relativ geringem Aufwand geprüft und in vielen Fällen ebenfalls bereits das Nichtvorhandensein von Intersektionen bzw. einer kollisionsfreien potenziellen Bewegung anzeigen können.

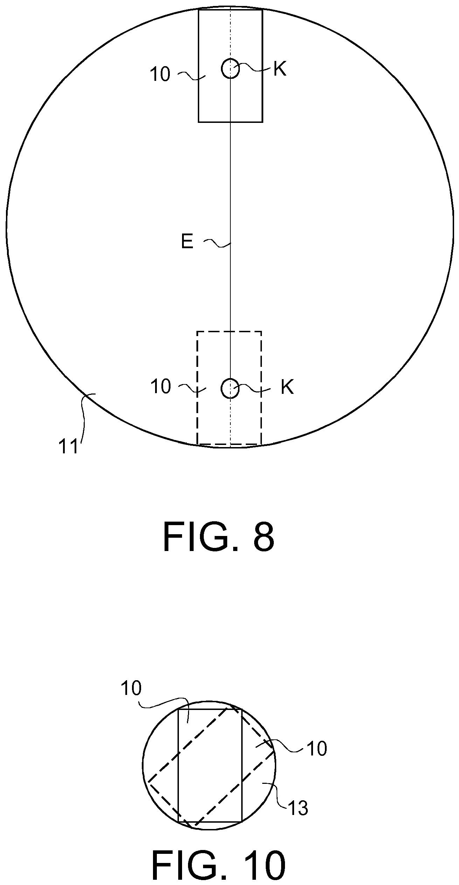

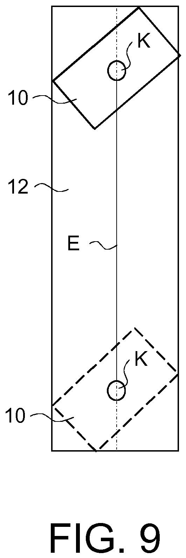

Im Falle des vorliegenden Ausführungsbeispiels werden zuerst in einer ersten Stufe als überstrichene Flächen die Umkreise 11, siehe Fig. 8, zumindest eines der prüfendenden fahrerlosen Transportfahrzeuge 1 bestimmt und auf eine Überschneidung überprüft. Sollte eine Überschneidung erkannt werden, werden in einer zweiten Stufe, siehe Fig. 9, die jeweiligen achsenparallelen minimalen umschließenden Rechtecke 12 auf Intersektion überprüft. Beide Überprüfungen lassen sich relativ effizient implementieren und schließen bei Nichtvorhandensein einer Intersektion bereits eine Intersektion der genauer modellierten überstrichenen Flächen aus.

Ergibt sich eine Überschneidung für die erste Stufe, dann wird die Überschneidung der zweiten Stufe überprüft. Ergibt sich wieder eine Überschneidung, dann wird in einer dritten und letzten Stufe die Überschneidung basierend auf der genauer modellierten Form der überstrichenen Flächen überprüft. Ergibt sich wieder eine Überschneidung, dann kann die fragliche Bewegung nicht ausgeführt werden und wird für die Planung des fraglichen Pfades verworfen.

In der ersten Stufe werden also im Falle des vorliegenden Ausführungsbeispiels die von den fahrerlosen Transportfahrzeugen 1 potenziell überstrichenen Flächen mittels der Umkreise 11 gebildet. Dazu werden für die fraglichen fahrerlosen Transportfahrzeuge 1 und die fraglichen Streckenabschnitte S bzw. den zugeordneten Kanten E die Orientierungen des fahrerlosen Transportfahrzeugs 1 unter Verwendung seines konvexen zweidimensionalen Modells 10 an den beiden Enden des fraglichen Streckenabschnitts S simuliert, indem die entsprechenden Orientierungen an den Knoten K des Graphen G, die den beiden Enden des fraglichen Streckenabschnitts S zugeordnet sind, simuliert werden.

In der Fig. 8 ist eines der konvexen zweidimensionalen Modelle 10 des fahrerlosen Transportfahrzeugs 1 an einem der Knoten K strichliert gezeichnet. Die simulierte Bewegung des fahrerlosen Transportfahrzeugs ist derart, dass es sich von dem Knoten K, an dem das zweidimensionale konvexe Modell 10 strichliert gezeichnet ist, zum anderen Knoten K, an dem das zweidimensionale konvexe Modell 10 mit durchgezogenen Linien gezeichnet ist, bewegen soll. Der Umkreis 11 als überstrichene Fläche der ersten Stufe umschließt die beiden zweidimensionalen konvexen Modelle 10 an den beiden Knoten K.

Die Fig. 10 zeigt ein Beispiel eines sich auf der Stelle drehenden fahrerlosen Transportfahrzugs 1 mit entsprechendem kleinsten Umkreis 13 als überstrichene Fläche.

In der zweiten Stufe werden im Falle des vorliegenden Ausführungsbeispiels die von den fahrerlosen Transportfahrzeugen 1 potenziell überstrichenen Flächen mittels des umschließenden achsenparallelen Rechtecks 12 gebildet. Dazu wird für das fahrerlose Transportfahrzeug 1 und den fraglichen Streckenabschnitt S bzw. der zugeordneten Kante E die Orientierungen des fahrerlosen Transportfahrzeugs 1 unter Verwendung seines zweidimensionalen konvexen Modells 10 an den beiden Enden des fraglichen Streckenabschnitts S simuliert, indem die entsprechenden Orientierungen an den Knoten K des Graphen G, die den beiden Enden des fraglichen Streckenabschnitts S zugeordnet sind, simuliert werden. In der Fig. 9 ist eines der zweidimensionale konvexen Modelle 10 des fahrerlosen Transportfahrzeugs 1 an einem der Knoten K strichliert gezeichnet. Die simulierte Bewegung des fahrerlosen Transportfahrzeugs 1 ist derart, dass es sich von dem Knoten K, an dem das zweidimensionale konvexe Modell 10 strichliert gezeichnet ist, zum anderen Knoten K, an dem das konvexe zweidimensionale Modell 10 mit durchgezogenen Linien gezeichnet ist, bewegen soll. Das umschließende achsenparallele Rechteck 12 als überstrichene Fläche der zweiten Stufe umschließt die beiden zweidimensionalen konvexen Modelle 10 an den beiden Knoten K.

Im Falle des vorliegenden Ausführungsbeispiels kann die Form der überstrichenen Fläche insbesondere der dritten Stufe auch von der Art einer potenziellen Bewegung abhängen. So kann es z.B. vorgesehen sein, dass das fahrerlose Transportfahrzeug 1 entlang eines bestimmten Streckenabschnitts S entlang einer virtuellen Leitlinie fahren soll. Es kann aber vorgesehen sein, dass das fahrerlose Transportfahrzeug 1 autonom einen bestimmten Streckenabschnitt S z.B. durch Auswerten von Bildern der Umgebung U befahren soll.

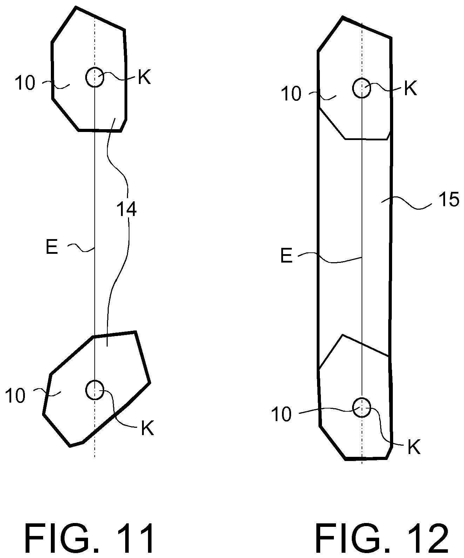

Die Figuren 11 bis 13 zeigen ein paar Beispiele von überstrichenen Flächen für die dritte Stufe.

Die Fig. 11 zeigt eine überstrichene Fläche 14 bei einer potenziellen autonomen Bewegung des fahrerlosen Transportfahrzeugs 1 entlang eines bestimmten Streckenabschnitts S. In diesem Fall wird als überstrichene Fläche 14 lediglich die besetzte Fläche am Anfang der Bewegung und die besetzte Fläche am Ende der Bewegung entlang des fraglichen Streckenabschnitts S verwendet, d.h. die überstrichene Fläche 14 ist die Vereinigung der zweidimensionalen konvexen Modelle 10 an den Knoten K, die dem fraglichen Streckenabschnitt S zugeordnet sind. In diesem Fall wird also nur die Planungsform, d.h. das zweidimensionale konvexe Modell 10 des fahrerlosen Transportfahrzeugs 1 an den beiden Knoten K berücksichtigt. Insbesondere wird die Kollisionsüberprüfung für die beiden zweidimensionalen konvexen Modelle an den beiden Enden des fraglichen Streckenabschnitts einzeln durchgeführt.

Die Fig. 12 zeigt ein Beispiel einer simulierten Bewegung des fahrerlosen Transportfahrzeugs 1 z.B. entlang einer virtuellen Leitlinie. Die Orientierungen des fahrerlosen Transportfahrzeugs 1 sind an beiden Enden des fraglichen Streckenabschnitts S bzw. an den beiden fraglichen Knoten dieselben. Das fahrerlose Transportfahrzeug 1 soll also seine Orientierung während der Bewegung nicht ändern. Die überstrichene Fläche ist in diesem Fall eine weitere konvexe Hülle 15, welche die zweidimensionalen konvexen Modelle 10 an den beiden Knoten K, die dem fraglichen Streckenabschnitt S zugeordnet sind, umschließt.

Die Fig. 13 zeigt ein Beispiel einer simulierten Bewegung des fahrerlosen Transportfahrzeugs 1 z.B. entlang einer virtuellen Leitlinie. Die Orientierungen des fahrerlosen Transportfahrzeugs 1 sind an beiden Enden des fraglichen Streckenabschnitts S bzw. an den beiden fraglichen Knoten unterschiedlich. Das fahrerlose Transportfahrzeug 1 soll also seine Orientierung während der Bewegung ändern. In diesem Fall werden z.B. für das Bestimmen der überstrichenen Fläche zunächst die Umkreise 16 der zweidimensionalen konvexen Modelle 10 an den beiden fraglichen Knoten K bestimmt und anschließend eine konvexe Hülle 17 als überstrichene Fläche ermittelt, welche die Umkreise 16 an den beiden Knoten K, die dem fraglichen Streckenabschnitt S zugeordnet sind, umschließt. Insbesondere umfasst die konvexe Hülle 17 die beiden Umkreise 16 und ein Rechteck 18 mit vier Seiten. Jeweils zwei der Seiten sind gegenüberliegend, sodass das Rechteck 18 zwei Seitenpaare aufweist, die jeweils zwei der gegenüberliegenden Seiten umfasst. Die Längen der Seiten eines Seitenpaare entsprechen den Längen der fraglichen Kante E und die Längen der Seiten des anderen Seitenpaares entsprechen den Durchmessern der Umkreise 16. Die Seiten eines der Seitenpaare verlaufen durch die Knote K.

Das Überprüfung der Kollision kann insbesondere durchgeführt werden, indem die beiden Umkreisen 16 einzeln und separat das Rechteck 18 anstelle der kompletten konvexen Hülle 17 verwendet werden.

Auf diese Art und Weise kann insbesondere sichergestellt werden, dass die unterschiedlichen Eigenschaften verschiedener Arten von Bewegungen passend berücksichtigt werden.

Die Form, welche zur Berechnung der fraglichen überstrichenen Fläche herangezogen wird, ist insbesondere abhängig von der Orientierung bei Beginn der Bewegung entlang einer Kante E und einer geplanter Orientierung am Ende der Bewegung. Sofern beide Orientierungen übereinstimmen, wird vorzugsweise für die dritte Stufe genau die Fläche berücksichtigt, welche die Planungsform, d.h. das im Falle des vorliegenden Ausführungsbeispiels das zweidimensionale konvexe Modell 10 des beladenen fahrerlosen Transportfahrzeugs 1 unter Beibehaltung dieser Orientierung überstreicht. So ergibt sich ein konvexes Polygon, d.h. die konvexe Hülle 15, was essentiell für die Nutzung des vorzugsweise verwendeten Trennungssatzes ist.

Anderenfalls wird z.B. die überstrichene Fläche berücksichtigt, welche der Umkreis 16 der Planungsform des fahrerlosen Transportfahrzeugs 1 überstreicht, wenn man diesen Umkreis 16 von einem der Knoten K zum anderen Knoten K der entsprechenden Kante E bewegt. Es ergibt sich wiederum eine konvexe Form, d.h. die konvexe Hülle 17.

Weiterhin kann zumindest die Gefahr, dass zwei aneinander vorbeifahrende fahrerlose Transportfahrzeuge 1 sich zu nah aneinander vorbei drehen, zumindest verringert werden, indem vorzugsweise ausschließlich konvexe Formen betrachtet werden.

Eines der fahrerlosen Transportfahrzeuge kann für die Kollisionsüberprüfung auch still stehen oder sich auf der Stelle drehen.

Auf diese Art und Weise kann sowohl die Bewegung entlang der Kante E bzw. des entsprechenden Streckenabschnitts S als auch die geplante Orientierung berücksichtigt werden.

## Patentansprüche

1. Verfahren zum Überprüfen einer Kollision zwischen einem fahrerlosen Transportfahrzeug (1) und einem weiteren fahrerlosen Transportfahrzeug während einer Planung einer Bewegung wenigstens des fahrerlosen Transportfahrzeugs (1), aufweisend folgende Verfahrensschritte:
- Bereitstellen von zweidimensionalen Modellen der fahrerlosen Transportfahrzeuge (1),
- Bestimmen einer von dem fahrerlosen Transportfahrzeug (1) überstrichenen Fläche, die das fahrerlose Transportfahrzeug (1) während der geplanten Bewegung überstreicht, und
- Bestimmen einer von dem weiteren fahrerlosen Transportfahrzeug weiteren überstrichenen Fläche, die das weitere fahrerlose Transportfahrzeug während der geplanten Bewegung überstreicht, und Überprüfen einer Kollision zwischen dem fahrerlosen Transportfahrzeug (1) und dem weiteren fahrerlosen Transportfahrzeug, indem die beiden überstrichenen Flächen auf ein Überschneiden überprüft werden, oder Überprüfen einer Kollision zwischen dem fahrerlosen Transportfahrzeug (1) und dem weiteren fahrerlosen Transportfahrzeug, indem die dem fahrerlosen Transportfahrzeug (1) zugeordnete überstrichene Fläche auf ein Überschneiden mit dem zweidimensionalen Modell des weiteren Transportfahrzeugs überprüft wird.

2. Verfahren nach Anspruch 1, aufweisend: Verwerfen der Planung oder des fraglichen Teils der Planung, wenn sich das zweidimensionale Modell des weiteren fahrerlosen Transportfahrzeug mit der überstrichenen Fläche überschneidet, bzw. Verwerfen der Planung oder des fraglichen Teils der Planung, wenn sich die beiden überstrichenen Flächen überschneiden.

3. Verfahren nach Anspruch 1 oder 2, bei dem die fahrerlosen Transportfahrzeuge (1) jeweils mit wenigstens einer Nutzlast (6, 7) beladen sind und die zweidimensionalen Modelle zweidimensionale konvexe Modelle der mit den Nutzlasten (6, 7) beladenen fahrerlosen Transportfahrzeuge (1) sind.

4. Verfahren nach Anspruch 3, bei dem das zweidimensionale konvexe Modell des mit der Nutzlast (6, 7) beladenen fahrerlosen Transportfahrzeugs (1) gemäß folgender Verfahrensschritte erstellt wird:
- Ermitteln des Umrisses der Draufsicht des mit der wenigstens einen Nutzlast (6, 7) beladenen fahrerlosen Transportfahrzeugs (1), und
- Bilden einer konvexen Hülle (9) des Umrisses, um das zweidimensionale konvexe Modell des mit der Nutzlast (6, 7) beladenen fahrerlosen Transportfahrzeugs (1) zu erhalten.

5. Verfahren nach Anspruch 4, bei dem zumindest ein Teil der Nutzlast (6) und/oder des fahrerlosen Transportfahrzeugs (1) als Draufsicht wenigstens einen kreisförmigen Umriss aufweist und vor dem Bilden der konvexen Hülle (9) der kreisförmige Umriss durch sein kleinstes umschließende Quadrat (8) angenähert wird.

6. Verfahren nach Anspruch 4 oder 5, aufweisend: Aufblähen der konvexen Hülle (9) um einen vorgegebenen Sicherheitsabstand, um das zweidimensionale konvexe Modell (10) des fahrerlosen Transportfahrzeugs (1) zu erhalten.

7. Verfahren nach einem der Ansprüche 1 bis 6, bei dem die überstrichene Fläche konvex ist.

8. Verfahren nach einem der Ansprüche 1 bis 7, bei dem die geplante Bewegung des fahrerlosen Transportfahrzeugs (1) ein Drehen des fahrerlosen Transportfahrzeugs (1) auf der Stelle und die überstrichene Fläche der kleinste Umkreis (13) des zweidimensionalen Modells ist.

9. Verfahren nach einem der Ansprüche 1 bis 7, bei dem die geplante Bewegung des fahrerlosen Transportfahrzeugs (1) entlang eines Streckenabschnitts (S) verläuft.

10. Verfahren nach Anspruch 9, bei dem für die überstrichene Fläche die geplanten Orientierungen des fahrerlosen Transportfahrzeugs (1) an den beiden Enden des Streckenabschnitts (S) berücksichtigt werden und/oder bei dem die überstrichene Fläche abhängig ist von der Art der geplanten Bewegung.

11. Verfahren nach Anspruch 9 oder 10, bei dem die überstrichene Fläche des fahrerlosen Transportfahrzeugs (1)
- der Umkreis (11) der zweidimensionalen Modelle an den beiden Enden des Streckenabschnitts (S) ist, oder
- das achsenparallele umschließende Rechteck (12) der zweidimensionalen Modelle an den beiden Enden des Streckenabschnitts (S) ist, oder
- die Summe der besetzten Fläche der zweidimensionalen Modelle an den beiden Enden des Streckenabschnitts (S) ist, oder
- eine konvexe Hülle (15), welche die zweidimensionalen Modelle an den beiden Enden des Streckenabschnitts (S) umschließt, oder
- die Umkreise (16) der zweidimensionalen Modelle des fahrerlosen Transportfahrzeugs (1) an den beiden Enden des Streckenabschnitts (S) umfasst und die überstrichene Fläche die konvexe Hülle (17) dieser beiden Umkreise (16) ist.

12. Verfahren nach einem der Ansprüche 1 bis 11, bei dem die Überprüfung der Kollision über mehrere hierarchische Stufen erfolgt, wobei die überstrichene Fläche in einer nachfolgenden Stufe im Vergleich zu seiner vorhergehenden Stufe genauer, jedoch rechenaufwändiger für das Überprüfen des Überschneidens ausgeführt wird, und nur dann die nachfolgende Stufe ausgeführt wird, wenn aufgrund seiner vorhergehenden Stufe die der vorhergehenden Stufe zugeordnete überstrichene Fläche des fahrerlosen Transportfahrzeugs (1) die der vorhergehenden Stufe zugeordnete weitere überstrichene Fläche bzw. das zweidimensionale Modell des weiteren Transportfahrzeugs überschneidet.

13. Verfahren nach Anspruch 12, aufweisend eine erste, eine zweite und eine dritte hierarchische Stufe, wobei insbesondere die überstrichene Fläche der ersten Stufe der Umkreis (11) der zweidimensionalen Modelle an den beiden Enden des Streckenabschnitts (S) ist, und die überstrichene Fläche der zweiten Stufe das achsenparallele umschließende Rechteck (12) der zweidimensionalen Modelle an den beiden Enden des Streckenabschnitts (S) ist.

14. System, aufweisend ein fahrerlose Transportfahrzeug (1), ein weiteres fahrerlose Transportfahrzeug (R) und einen Rechner, der mit den fahrerlosen Transportfahrzeugen zu kommunizieren vermag, wobei der Rechner (R) eingerichtet ist, das Verfahren nach einem der Ansprüche 1 bis 13 durchzuführen.

## Claims

1. Method for checking a collision between a driverless transport vehicle (1) and another driverless transport vehicle while planning a movement of at least the driverless transport vehicle (1), comprising the following steps:
- Providing two-dimensional models of the driverless transport vehicles (1),
- Determining an area covered by the driverless transport vehicle (1), which the driverless transport vehicle (1) covers during the planned movement, and
- Determining an area covered by the further driverless transport vehicle which the other driverless transport vehicle sweeps during the planned movement, and checking a collision between the driverless transport vehicle (1) and the further driverless transport vehicle by checking the two covered areas for an overlap, or checking a collision between the driverless transport vehicle (1) and the further driverless transport vehicle by checking the swept area assigned to the driverless transport vehicle (1) for an overlap with the two-dimensional model of the further transport vehicle.

2. The method of claim 1, comprising: discarding the planning or the part of the planning in question if the two-dimensional model of the further driverless transport vehicle overlaps with the swept area, or discarding the planning or the part of the planning in question if the two swept areas overlap.

3. Method according to Claim 1 or 2, in which the driverless transport vehicles (1) are each loaded with at least one payload (6, 7) and the two-dimensional models are two-dimensional convex models of the driverless transport vehicles (1) loaded with the payloads (6, 7).

4. Method according to Claim 3, in which the two-dimensional convex model of the driverless transport vehicle (1) loaded with the payload (6, 7) is created in accordance with the following steps:
- Determining the outline of the top view of the driverless transport vehicle (1) loaded with the at least one payload (6, 7), and
- Forming a convex envelope (9) of the outline in order to obtain the two-dimensional convex model of the driverless transport vehicle (1) loaded with the payload (6, 7).

5. Method according to Claim 4, in which at least a part of the payload (6) and / or the driverless transport vehicle (1) has at least one circular outline as a plan view, and before the convex hull (9) is formed, the circular outline through its smallest enclosing square (8) is approximated.

6. A method according to claim 4 or 5, comprising: inflating the convex envelope (9) by a predetermined safety distance in order to obtain the two-dimensional convex model (10) of the driverless transport vehicle (1).

7. Method according to one of claims 1 to 6, wherein the swept surface is convex.

8. Method according to one of Claims 1 to 7, in which the planned movement of the driverless transport vehicle (1) is a turning of the driverless transport vehicle (1) on the spot and the swept area is the smallest radius (13) of the two-dimensional model.

9. Method according to one of Claims 1 to 7, in which the planned movement of the driverless transport vehicle (1) runs along a route section (S).

10. Method according to Claim 9, in which the planned orientations of the driverless transport vehicle (1) at the two ends of the route section (S) are taken into account for the swept area and / or in which the swept area is dependent on the type of the planned movement.

11. The method of claim 9 or 10, wherein the swept area of the driverless transport vehicle (1)
- the circumference (11) of the two-dimensional models at the two ends of the route section (S), or
- the axially parallel enclosing rectangle (12) of the two-dimensional models at the two ends of the section (S), or
- is the sum of the occupied area of the two-dimensional models at the two ends of the route section (S), or
- a convex envelope (15) which encloses the two-dimensional models at the two ends of the route section (S), or
- the circles (16) of the two-dimensional models of the driverless transport vehicle (1) at both ends of the route section (S) and the swept area is the convex envelope (17) of these two circles (16).

12. Method according to one of Claims 1 to 11, in which the collision is checked via a plurality of hierarchical stages, the swept area being carried out more precisely, but more computationally, for checking the overlap in a subsequent stage compared to its previous stage, and only then the subsequent stage is carried out if, on the basis of its previous stage, the area of the driverless transport vehicle (1) assigned to the previous stage overlaps the other area or the two-dimensional model of the further transport vehicle assigned to the previous stage.

13. Method according to claim 12, comprising a first, a second and a third hierarchical level, in particular the swept area of the first step being the circumference (11) of the two-dimensional models at the two ends of the route section (S), and the swept area of the second Stage is the axis-parallel enclosing rectangle (12) of the two-dimensional models at the two ends of the route section (S).

14. System comprising a driverless transport vehicle (1), a further driverless transport vehicle (R) and a computer which is able to communicate with the driverless transport vehicles, the computer (R) being set up to carry out the method according to one of claims 1 to 13.

## Revendications

1. Procédé pour contrôler une collision entre un véhicule de transport sans conducteur (1) et un autre véhicule de transport sans conducteur lors de la planification d'un mouvement d'au moins le véhicule de transport sans conducteur (1), comprenant les étapes suivantes
- Fournir des modèles bidimensionnels des véhicules de transport sans conducteur (1),
- Déterminer une zone couverte par le véhicule de transport sans conducteur (1), que le véhicule de transport sans conducteur (1) couvre pendant le mouvement prévu, et
- Déterminer une zone couverte par l'autre véhicule de transport sans conducteur que l'autre véhicule de transport sans conducteur balaie pendant le mouvement prévu, et vérifier une collision entre le véhicule de transport sans conducteur (1) et l'autre véhicule de transport sans conducteur en vérifiant les deux zones couvertes pour un chevauchement, ou vérifier une collision entre le véhicule de transport sans conducteur (1) et l'autre véhicule de transport sans conducteur en vérifiant la zone balayée affectée au véhicule de transport sans conducteur (1) pour un chevauchement avec le modèle bidimensionnel de l'autre véhicule de transport.

2. Procédé selon la revendication 1, comprenant: l'élimination de la planification ou de la partie de la planification en question si le modèle bidimensionnel de l'autre véhicule de transport sans conducteur chevauche la zone balayée, ou l'élimination de la planification ou de la partie de la planification dans question de savoir si les deux zones balayées se chevauchent.

3. Procédé selon la revendication 1 ou 2, dans lequel les véhicules de transport sans conducteur (1) sont chacun chargés d'au moins une charge utile (6, 7) et les modèles bidimensionnels sont des modèles convexes bidimensionnels des véhicules de transport sans conducteur (1) chargé avec les charges utiles (6, 7).

4. Procédé selon la revendication 3, dans lequel le modèle convexe bidimensionnel du véhicule de transport sans conducteur (1) chargé de la charge utile (6, 7) est créé selon les étapes suivantes:
- déterminer le contour de la vue de dessus du véhicule de transport sans conducteur (1) chargé de l'au moins une charge utile (6, 7), et
- formation d'une enveloppe convexe (9) du contour afin d'obtenir le modèle convexe bidimensionnel du véhicule de transport sans conducteur (1) chargé de la charge utile (6, 7).

5. Procédé selon la revendication 4, dans lequel au moins une partie de la charge utile (6) et / ou du véhicule de transport sans conducteur (1) présente au moins un contour circulaire en vue de dessus, et avant que la coque convexe (9) soit formé, le contour circulaire à travers son plus petit carré englobant (8) est approximé.

6. Procédé selon la revendication 4 ou 5, comprenant: le gonflage de l'enveloppe convexe (9) d'une distance de sécurité prédéterminée afin d'obtenir le modèle convexe bidimensionnel (10) du véhicule de transport sans conducteur (1).

7. Procédé selon l'une des revendications 1 à 6, dans lequel la surface balayée est convexe.

8. Procédé selon l'une des revendications 1 à 7, dans lequel le mouvement prévu du véhicule de transport sans conducteur (1) est un virage du véhicule de transport sans conducteur (1) sur place et la zone balayée est le plus petit rayon (13) du modèle bidimensionnel.

9. Procédé selon l'une des revendications 1 à 7, dans lequel le déplacement prévu du véhicule de transport sans conducteur (1) parcourt une section d'itinéraire (S).

10. Procédé selon la revendication 9, dans lequel les orientations prévues du véhicule de transport sans conducteur (1) aux deux extrémités du tronçon d'itinéraire (S) sont prises en compte pour la zone balayée et / ou dont dépend la zone balayée sur le type de mouvement prévu.

11. Procédé selon la revendication 9 ou 10, dans lequel la zone balayée du véhicule de transport sans conducteur (1)
- la circonférence (11) des modèles bidimensionnels aux deux extrémités du tronçon d'itinéraire (S), ou
- le rectangle englobant axialement parallèle (12) des modèles bidimensionnels aux deux extrémités de la section (S), ou
- est la somme de la zone occupée des modèles bidimensionnels aux deux extrémités du tronçon de route (S), ou
- une enveloppe convexe (15) qui renferme les modèles bidimensionnels aux deux extrémités du tronçon de route (S), ou
- les cercles (16) des modèles bidimensionnels du véhicule de transport sans conducteur (1) aux deux extrémités du tronçon d'itinéraire (S) et la zone balayée est l'enveloppe convexe (17) de ces deux cercles (16).

12. Procédé selon l'une des revendications 1 à 11, dans lequel la collision est contrôlée via une pluralité d'étages hiérarchiques, la zone balayée étant réalisée plus précisément, mais de façon plus informatique, pour vérifier le chevauchement dans une étape ultérieure par rapport à son étape précédente, et alors seulement l'étape suivante est effectuée si, sur la base de son étape précédente, la zone du véhicule de transport sans conducteur (1) affectée à l'étape précédente chevauche l'autre zone ou le modèle bidimensionnel du autre véhicule de transport affecté à l'étape précédente.

13. Procédé selon la revendication 12, comprenant un premier, un deuxième et un troisième niveaux hiérarchiques, en particulier la zone balayée de la première étape étant la circonférence (11) des modèles bidimensionnels aux deux extrémités du tronçon d'itinéraire (S), et la zone balayée du deuxième étage est le rectangle englobant axe-parallèle (12) des modèles bidimensionnels aux deux extrémités de la section d'itinéraire (S) .

14. Système comprenant un véhicule de transport sans conducteur (1), un autre véhicule de transport sans conducteur (R) et un ordinateur qui est capable de communiquer avec les véhicules de transport sans conducteur, l'ordinateur (R) étant configuré pour exécuter le procédé selon l'une des revendications 1 à 13.
